(19) Europäisches Patentamt

European Patent Office

Office européen des brevets

(11) EP 0 947 359 B1

## (12) EUROPEAN PATENT SPECIFICATION

(45) Date of publication and mention
of the grant of the patent:
**01.03.2006 Bulletin 2006/09**

(51) Int Cl.:
***B60C 23/06*** *(2006.01)*

(21) Application number: **99302591.5**

(22) Date of filing: **01.04.1999**

(54) **Method for alarming decrease in tyre air-pressure and apparatus therefor**

Gerät und Verfahren zum Warnen vor Reifendruckverlust

Appareil et procédé d'alarme de réduction de pression d'un pneumatique

(84) Designated Contracting States:
**DE FR GB**

(30) Priority: **02.04.1998 JP 8980398**

(43) Date of publication of application:
**06.10.1999 Bulletin 1999/40**

(73) Proprietors:
• **SUMITOMO RUBBER INDUSTRIES LIMITED
Kobe-shi,
Hyogo-ken (JP)**
• **SUMITOMO ELECTRIC INDUSTRIES, LTD
Osaka-shi,
Osaka-fu 541 (JP)**

(72) Inventor: **Yanase, Minao
Nishi-ku,
Kobe-shi,
Hyogo-ken (JP)**

(74) Representative: **Manitz, Finsterwald & Partner
GbR
Postfach 31 02 20
80102 München (DE)**

(56) References cited:
**EP-A- 0 716 941      EP-A- 0 786 362**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a method for alarming decrease in tyre air-pressure and an apparatus therefor. More particularly, it relates to a method for alarming decrease in tyre air-pressure and an apparatus therefor for detecting decrease in air pressure of tyres used, for example, for trucks or buses in which the differences in tread widths (axle distances between right and left tyre positions) between from and rear wheels are large.

Apparatuses for detecting decrease in tyre air-pressure through comparison of relative wheel speeds have been proposed (e.g. Japanese Examined Patent Publication No 55322/1993). According to this publication, there are employed various methods for improving the accuracy of detection such as performing comparison of respective sums of wheel speeds of diagonally positioned wheels or performing judgement only in the case whee the vehicle is in a straight-ahead running condition in which disturbance factors are limited. However, judgement needs to be performed even in the case where the vehicle is making a turn since the chance of detecting pressure loss is otherwise decreased. Further, there have been proposed methods of correcting disturbances (influences) during turning by incorporating the lateral acceleration. Examples of such methods are disclosed, for instance, in Japanese Unexamined Patent Publication No 8713/1994, Japanese Unexamined Patent Publication No 501040/1996 or Japanese Unexamined Patent Publication No 164720/1996.

A method according to the preamble of claim 1 and apparatus according to the preamble of claim 3 are known from this last document JP 08 164 720.

The above-mentioned correction based on lateral acceleration does not present problems in the case of passenger cars in which differences in tread widths between front and rear wheels are small. However, in the case of vehicles in which differences of tread widths between front and rear wheels are large such as trucks or buses which mostly have multiple wheels as their rear wheels, determination errors cannot be sufficiently corrected and so it is difficult to improve the determination accuracy.

In view of these facts, it is an object of the present invention to provide a method for alarming decrease in tyre air-pressures and an apparatus therefore in the accuracy of determining air-pressure is improved.

According to the present invention, there is provided a method of alarming decrease in tyre air-pressure according to claim 1.

In accordance with the present invention, there is further provided an apparatus for alarming decrease in tyre air-pressure according to claim 3.

In the present invention, the accuracy of determining loss of tyre air-pressure is improved by performing correction of determined values of decompression through a function including tread widths of vehicles to allow for tread widths of front and rear wheels which largely differ such as trucks or buses.

Further aspects of the invention will be apparent from the following description by way of example only in which:

Figure 1 is a block diagram showing electric arrangements of an apparatus for alarming decrease in tyre air-pressure according to the present invention;
Figure 2 is an explanatory diagram for obtaining the turning radiuses of wheel tyres;
Figure 3 is a view showing relationships between DEL values and lateral G in the case where a vehicle is making a turn at turning radiuses of 40m, 110m and 150m, respectively.
Figure 4 is a view showing relationships between DEL values and reciprocals of turning radiuses of Figure 3; and
Figure 5 is a view showing relationships between determined values in case differences in tread widths are incorporated as a correction term and reciprocals of turning radiuses.

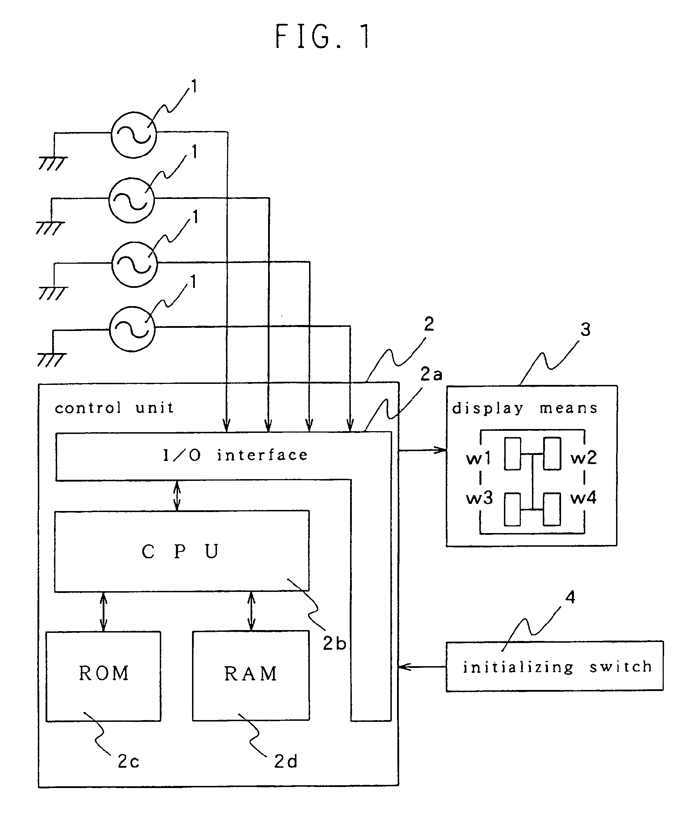

As shown in Figure 1, the apparatus for signalling a decrease in air-pressure according to one embodiment of the present invention is for a four wheeled vehicle. It determines whether any of the four wheels $W_1$, $W_2$ $W_3$ and $W_4$ has decreased or not, and comprises wheel speed sensors 1 of normal arrangements which are respectively arranged in connection with each of the wheels $W_1$, $W_2$ $W_3$ and $W_4$. The outputs of the wheel speed sensors 1 are supplied to a control unit 2. To the control unit 2, there is also connected a display means 3 comprising liquid crystal display elements, plasma display elements, or a CRT for informing the drive of any tyre $W_i$ of which the air-pressure has decreased. It should be noted that 4 denotes an initialising switch.

The control units 2 comprises an I/O interface 2a required for sending/receiving signals to/from an external device a CPU 2b which functions as a centre of calculation, a ROM 2c which stores a control operation program for the CPU 2b, and a RAM 2d into which data is temporarily written and from which the data is read out when the CPU 2b performs control operations. The determining means of the present embodiment is included in the control unit 2.

From each of the vehicle speed sensors 1, there is an output comprising a pulse signal corresponding to the number of revolutions of tyre Wi (hereinafter referred to as "wheel speed pulse"). In the CPU 2b, the number of revolutions $N_i$ of each of the wheels Wi is calculated for each specified sampling cycle $\Delta T$(sec), e.g. $\Delta T = 1$ second, based on the wheel speed pulse output from the wheel speed sensor 1.

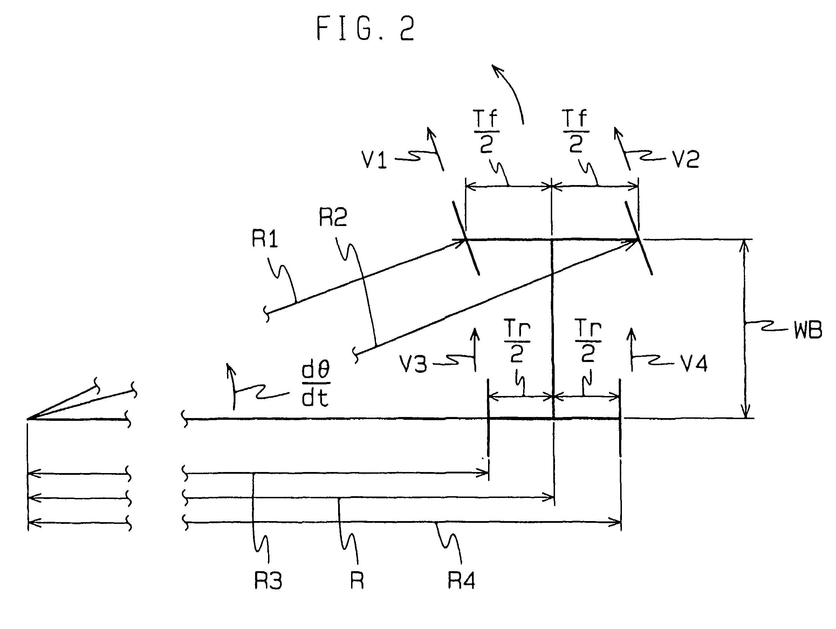

First, the wheel speeds of each of the tyres when the vehicle is travelling in a curved path are respectively represented as indicated below and as shown in Figure 2.

$$V1 = R1 \ (d\theta/dt)$$

$$V2 = R2 \ (d\theta/dt)$$

$$V3 = R3 \ (d\theta/dt)$$

$$V4 = R4 \ (d\theta/dt)$$

where
Ri is the turning radius at each wheel position and $d\theta/dt$ turning angular speed of vehicle
and

$$R1 = ((R-Tf/2)^2+WB^2)^{0.5}$$

$$R2 = ((R+Tf/2)^2+WB^2)^{0.5}$$

$$R3 = (R-Tr/2)$$

$$R4 = (R+TR/2)$$

Tf:    tread width of front wheel
Tr:    tread width of rear wheel
WB:    wheelbase
R:    turning radius of vehicle

It should be noted that the turning radius R of vehicle can be obtained as below, in the case where the vehicle is a rear wheel driven vehicle, from the wheel speeds of an outside or external wheel of following wheels with respect to the turn and an inside or internal wheel of the following wheels with respect to the turn.

$$1/R=(V1-V2)/(V1+V2) \times (2/Tf)$$

It should, however, be noted that during the turning movement, load is moved from the inside wheel to the turn to the outside wheel with respect to the turn. Owing to this load transfer, the dynamic load radius of the outside wheel becomes smaller, so for both the measured wheel speed is shifted from the true accurate wheel speed. Therefore, in order to obtain a turning radius which is as accurate as possible, it is preferable that correction be performed based on relationships between actual turning radiuses and computed turning radiuses obtained through actual measurements.
The determined value of decompression (DEL value) for detecting decrease in air-pressure of tyre $W_i$ is obtained

by comparing differences between two diagonal sums of front wheel tyres and rear wheel tyres which can be obtained from the following equation (1). This represents a ratio of a value obtained by decrementing a sum of signals of a pair of wheels positioned diagonally with respect to each other from a sum of signals of another pair of wheels positioned diagonally with respect to each other to an averaged value of the two sums (see, for instance, Japanese Examined Patent Publication No 55322/1993) .

$$DEL = \frac{2 \times \{(V1 + V4) - (V2 + V3)\}}{V1 + V2 + V3 + V4} \times 100$$

$$= \frac{2 \times \{(R1 + R4) - (R2 + R3)\}}{R1 + R2 + (R3 + R4} \times 100$$

$$= \frac{2 \times \{(R1 - R2) - R3 - R4)\}}{R1 + R2 + R3 + R4} \times 100$$

$$(1)$$

Here, where R is sufficiently large it can be assumed that

$$R1-R2 \cong Tf$$

$$R3-R4 \cong Tr$$

$$R1+R2+R3+R4 \cong 4 \times R$$

whereby equation (1) can be approximately expressed as equation (2).

$$DEL = \frac{2 \times (Tr - Tf)}{4 \times R} \times 100$$

$$= \frac{(Tr - Tf)}{2 \times R} \times 100 = \frac{\text{difference in tread width}}{2 \times (\text{turning radius})} \times 100$$

$$(2)$$

Conventionally, ordinary passenger cars satisfied the condition of $Tf \cong Tr$, whereby differences in tread widths became zero and the DEL value zero as well. However, for vehicles such as trucks or buses which have multiple wheels are rear wheels, the tread width of the multiple wheels is made smaller by a value corresponding to twice the width of the tyre even though the width of the vehicle is constant in the longitudinal direction thereof. Therefore, in the case of trucks or buses in which the difference in tread widths is large, the DEL value is shifted and largely affects the detection of decompression as is evident from equation (2). In actual vehicles, the wheel speed cannot be directly measured but is calculated as follows based on the number of revolutions per second of each of the wheels.

$$V1 = R1 \times (d\theta/dt) = N1 \times 2\pi \times r1$$

$$V2 = R2 \times (d\theta/dt) = N2 \times 2\pi \times r2$$

$$V3 = R3 \times (d\theta/dt) = N3 \times 2\pi \times r3$$

$$V4 = R4 \times (d\theta/dt) = N4 \times 2\pi \times r4$$

Here, Ni: number of revolutions per second of each of the wheels
ri: dynamic load radius of each of the wheels
Ri: turning radius at each wheel position
$d\theta/dt$: turning angular speed of vehicle

Since the dynamic load radii of each of the wheels are made to be constant values through initialisation, Vi=2×r×Ni is satisfied in case r1=r, r2=r, r3=r and r4-r, whereby the DEL value can be converted into the following equation (3).

$$DEL = \frac{2 \times \{(V1 + V4) - (V2 + V3)\}}{V1 + V2 + V3 + V4} \times 100$$

$$= \frac{2 \times \{(N1 + N4) - (N2 + N3)\}}{N1 + N2 + N3 + N4} \times 100$$

$$= \frac{2 \times \{(N1 - N2) - (N3 - N4)\}}{N1 + N2 + N3 + N4} \times 100 \qquad (3)$$

This DEL value is expressed by the number of revolutions of the tyre. While this DEL value is coincident with equation (1) in the case where the tyre is at normal air-pressure and no slip or load moving between right and left wheels is present, that is, no variations exist in the dynamic load radius r. However, if any of the tyres are decompressed, the DEL value is changed since the number of revolutions Ni becomes (Ni+$\Delta$N), and the dynamic load radius r become (r-$\Delta$r).

For instance, in the case where tyre 1 is decompressed, N1 becomes N1+$\Delta$N, whereby the above equation (3) is converted into the following equation (4).

$$DEL = \frac{2 \times \{(N1 - N2) - (N3 - N4)\}}{N1 + N2 + N3 + N4 + \Delta N} \times 100$$

$$+ \frac{2 \times \Delta N}{N1 + N2 + N3 + N4} \times 100$$

$$(4)$$

Since $\Delta$N is extremely small compared to N1+N2+N3+N4, the above equation (4) can be converted into the following equation (5) if it is presumed that N1+N2+N3+N4+$\Delta$N $\cong$ N1+N2+N3+N4.

$$DEL = \frac{2 \times \{(N1 - N2) - (N_3 - N4)\}}{N1 + N2 + N3 + N4} \times 100$$

$$+ \frac{2 \times \Delta N}{N1 + N2 + N3 + N4} \times 100$$

$$= \frac{\text{difference in tread width}}{2 \times (\text{turning radius}} \times 100 + \frac{2 \times \Delta N}{N1 + N2 + N3 + N4} \times 100$$

= (DEL value due to differences in tread

widths) + (DEL value due to decompression of tyre).

(5)

Therefore, it can be seen from equation (5) that the accuracy of determining decompression of a tyre needs to be improved by also incorporating DEL values which are due to differences in tread widths into the determined value of decompression.

The present invention will now be explained based on an embodiment thereof. However, the present invention is not limited to this embodiment only.

EMBODIMENT

In a 2-D.4 wheel vehicle in which two front wheels serve a steering wheels and four rear wheels (multiple wheels) are driving wheels, the tread width of the rear driving wheels is smaller by 195 mm than the tread width of the front wheels (steering wheels).

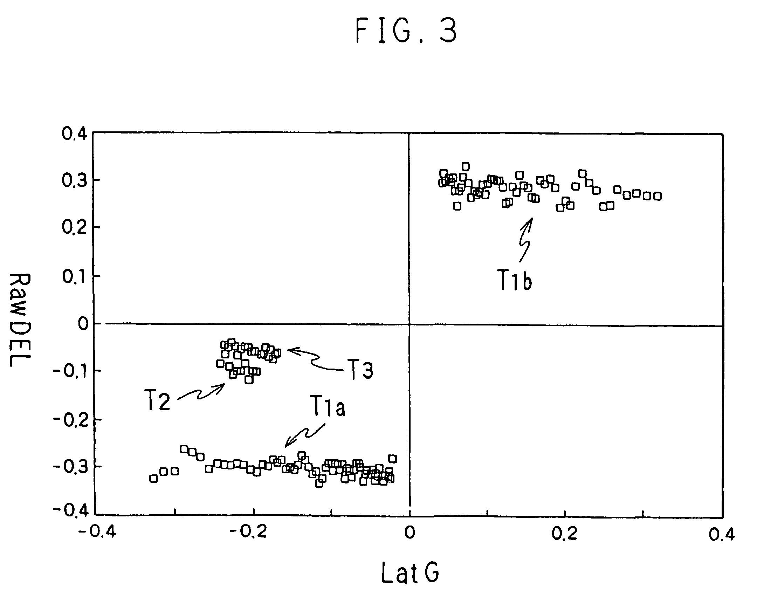

Figure 3 shows the relationship between RawDEL values and lateral G (lateral acceleration) LatG as calculated from equation (3) with respect to the front wheels and the inside rear wheels from among multiple wheels in the case where this vehicle is turning at turning radii R of 40 m, 110 m, 150 m, respectively. It should be noted that $T_{1a}$, denotes a left turn of 40 m, $T_{1b}$ a right turn of 40 m, $T_2$ a left turn of 110 m, and $T_3$ a left turn of 150 m, respectively.

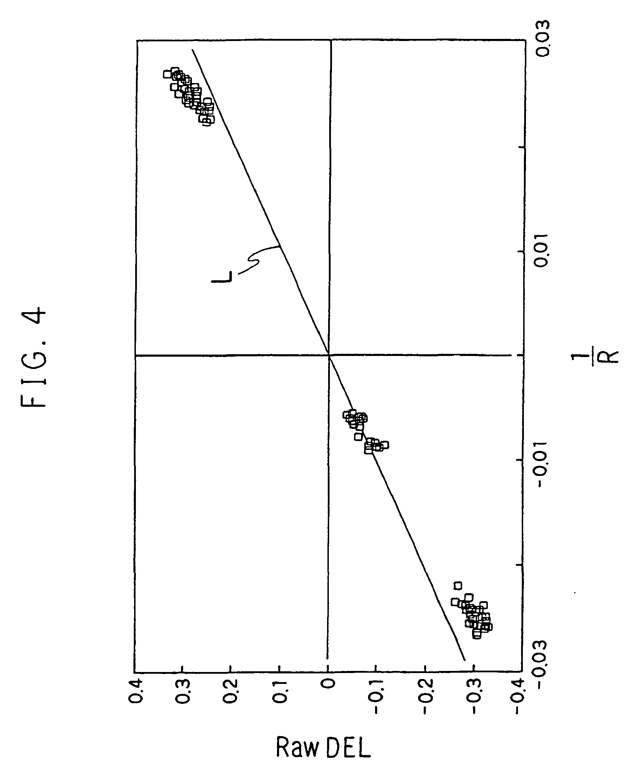

In the case of passenger cars hardly any differences in tread widths exist between front and rear axles, and the data points are distributed on a straight-line substantially passing through the origin as is evident from equation (2). However, since difference in tread widths between the front and rear axles exist in the present embodiment, the RawDEL value hardly changes and is substantially constant regardless of variations in lateral G in each of the conditions for the turning radii, and it rather seems that the RawDEL value is dependent on the turning radius. Therefore, if the RawDEL value is adjusted by the reciprocal of the turning radius R, it seems that all of the data points are present on the same line as shown in Figures 4.

If DEL values owing to differences in tread widths (195 mm) are calculated based on equation (2) and are written into Figure 4, the straight line L is obtained, and it can thus be seen that it is well coincident with actual measured values.

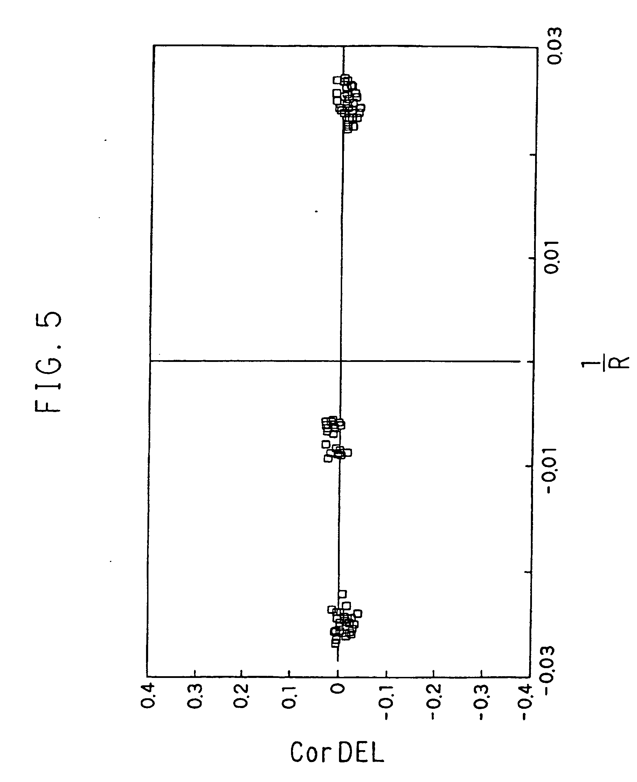

Therefore, by performing correction in the present invention based on the equation for correction as represented by the following equation (6), the CorDEL values become substantially zero as shown in Figure 5. Since the CorDEL values are hardly affected by differences in treads, decompression of a tyre can be determined if the CorDEL is shifted from zero.

$$CorDEL = RawDEL - a \times \frac{\text{difference in tread width}}{2 \times (\text{turning radius})} \times 100$$

(6)

Here, a denotes a coefficient for correcting differences in theoretical and actual values. The coefficient a can be obtained as follows. First, a turning radius is traced by inert or steady driving at a specified speed. This is performed to eliminate influences of slip of the internal driving wheels with respect to the turn which might be due to driving force during turning movements. Then, the RawDEL value at this time is plotted with the lateral G being taken on the lateral axis, and the RawDEL value at the time of lateral G=0 is obtained. This is performed to eliminate influences on the RawDEL value of load moving during the turning. It should be noted that in the case of Figure 3 representing this embodiment, the RawDEL values are hardly affected by the influence of load moving, and the RawDEL values are constant (horizontal) with respect to lateral G.

This is performed for various turning radii, and the RawDEL values thus obtained are plotted with respect to values corresponding to (difference in tread widths)/(reciprocal of turning radius x 2) taken on the lateral axis. Then, coefficient a is obtained from the slop of the regression line calculated by the least-squares method. In this embodiment, a=1.2019 was satisfied.

As explained above, the present invention is capable of improving the accuracy of determining decompression of air-pressure by incorporating a correction term related to differences in tread widths of a vehicle.

## Claims

1. A method for alarming decrease in tyre air-pressure in which rotational speed of a tyre is detected and utilised to determine whether air-pressure of the tyre has decreased and an alarm is generated, the method using an equation for calculating a determined value for detecting decompression of a tyre by comparing the difference between two diagonal sums, **characterized by** including a correction term related to differences between tread widths of front and rear wheels of the vehicle.

2. The method of claim 1, **characterised in that** the vehicle is a multi-axle vehicle with at least three axles and the method is applied to a plurality of combinations of axles.

3. An apparatus for alarming decrease in tyre air-pressure in which rotational speed of a tyre is detected, it is determined whether air-pressure of the tyre has decreased based on the detected rotational speed, and an alarm is generated when internal pressure of the tyre has decreased, comprising a speed detecting means (1) which detects wheel speeds of each of the tyres, and a determining means (2) which calculates and processes determined values of decompression obtained by comparing differences of two diagonal sums of number of revolution of front tyres and number of revolution of rear tyres based on number of revolutions obtained from the wheel speeds as detected by the speed detecting means (1), **characterized in that** the determined values of decompression of the determining means include correction terms related to differences between tread widths of front and rear wheels of a vehicle.

4. The apparatus of claim 3, wherein the vehicle is a multi-axle vehicle with at least three axles and the method is applied to a plurality of combinations of axles.

## Patentansprüche

1. Verfahren zum Warnen vor einer Abnahme eines Reifenluftdruckes, bei dem die Drehgeschwindigkeit eines Reifens detektiert und dazu verwendet wird, festzustellen, ob der Luftdruck des Reifens abgenommen hat, und eine Warnung erzeugt wird, wobei das Verfahren eine Gleichung zum Berechnen eines bestimmten Wertes zum Detektieren eines Luftverlustes eines Reifens verwendet, indem die Differenz zwischen zwei diagonalen Summen verglichen wird, **dadurch gekennzeichnet, dass** ein Korrekturterm eingearbeitet wird, der mit Differenzen zwischen Laufflächenbreiten von vorderen und hinteren Rädern des Fahrzeugs in Beziehung steht.

2. Verfahren nach Anspruch 1, **dadurch gekennzeichnet, dass** das Fahrzeug ein Mehrachsenfahrzeug mit mindestens drei Achsen ist, und das Verfahren auf eine Vielzahl von Achskombinationen angewandt wird.

3. Vorrichtung zum Warnen vor einer Abnahme eines Reifenluftdruckes, bei der die Drehgeschwindigkeit eines Reifens detektiert wird, wobei auf der Grundlage der detektierten Drehgeschwindigkeit festgestellt wird, ob der Luftdruck des Reifens abgenommen hat, und ein Alarm erzeugt wird, wenn der Innendruck des Reifens abgenommen hat, mit einem Drehzahldetektionsmittel (1), das Raddrehzahlen von jedem der Reifen detektiert, und einem Bestimmungsmittel (2), das bestimmte Druckverlustwerte berechnet und verarbeitet, die erhalten werden, indem Differenzen von zwei diagonalen Summen einer Anzahl von Umläufen von vorderen Reifen und einer Anzahl von Umläufen von hinteren Reifen auf der Grundlage einer Anzahl von Umläufen, die aus den von dem Drehzahldetektionsmittel (1) detektierten Raddrehzahlen erhalten werden, verglichen werden, **dadurch gekennzeichnet, dass** die bestimmten Druckverlustwerte des Bestimmungsmittels Korrekturterme enthalten, die mit Differenzen zwischen Laufflächenbreiten von vorderen und hinteren Rädern eines Fahrzeugs in Beziehung stehen.

**4.** Vorrichtung nach Anspruch 3, wobei das Fahrzeug ein Mehrachsenfahrzeug mit mindestens drei Achsen ist, und das Verfahren auf eine Vielzahl von Achskombinationen angewandt wird.

**Revendications**

**1.** Procédé d'alarme de réduction de pression d'un pneumatique, dans lequel la vitesse de rotation d'un pneumatique est détectée et utilisée pour déterminer si la pression du pneumatique a diminué et une alarme est produite, le procédé utilisant une équation pour calculer une valeur déterminée afin de détecter la décompression d'un pneumatique en comparant la différence entre deux sommes diagonales, **caractérisé par** l'inclusion d'un terme de correction lié aux différences entre les largeurs de bande de roulement des roues avant et arrière du véhicule.

**2.** Procédé selon la revendication 1, **caractérisé en ce que** le véhicule est un véhicule multi-essieux avec au moins trois essieux et le procédé est appliqué à une pluralité de combinaisons d'essieux.

**3.** Appareil d'alarme de réduction de pression d'un pneumatique, dans lequel la vitesse de rotation d'un pneumatique est détectée, il est déterminé si la pression du pneumatique a diminué sur la base de la vitesse de rotation détectée, et une alarme est produite quand la pression interne du pneumatique a diminué, comprenant un moyen de détection de vitesse (1) qui détecte les vitesses de roue de chacun des pneumatiques, et un moyen de détermination (2) qui calcule et traite les valeurs de décompression déterminées obtenues en comparant les différences de deux sommes diagonales du nombre de révolutions des pneumatiques avant et du nombre de révolutions des pneumatiques arrière sur la base du nombre de révolutions obtenues à partir des vitesses de roue telles que détectées par le moyen de détection de vitesse (1), **caractérisé en ce que** les valeurs de décompression déterminées du moyen de détermination comprennent des termes de correction liés aux différences entre les largeurs de bande de roulement des roues avant et arrière d'un véhicule.

**4.** Appareil selon la revendication 3, dans lequel le véhicule est un véhicule multi-essieux avec au moins trois essieux et le procédé est appliqué à une pluralité de combinaisons d'essieux.

# FIG. 1

FIG. 2

## FIG. 3

T1b

T3

T1a

T2

Raw DEL

0.4 0.3 0.2 0.1 0 -0.1 -0.2 -0.3 -0.4

-0.4 -0.2 0 0.2 0.4

Lat G

FIG. 4

EP 0 947 359 B1

## FIG. 5

EP 0 947 359 B1